# EUROPÄISCHE PATENTSCHRIFT

(11) **EP 1 389 682 B1**
(45) Veröffentlichungstag und Bekanntmachung des Hinweises auf die Patenterteilung: **19.10.2005**
(21) Anmeldenummer: 03024740.7
(22) Anmeldetag: 11.03.2000
(51) Int. Cl.: F03D 7/00, F03D 11/00, F03D 7/02

(54) **Verfahren zum Betreiben eines Windparks**
Method for operating a wind park
Procede de fonctionnement d'un parc d'eoliennes

(30) Priorität: 10.06.1999 DE 19926437; 11.06.1999 DE 19926553
(43) Veröffentlichungstag der Anmeldung: 18.02.2004
(62) Teilanmeldung aus: 00922513.7
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner

(56) Entgegenhaltungen:
- WO-A-94/19605
- US-A- 4 496 847
- US-A- 5 592 028
- PATENT ABSTRACTS OF JAPAN vol. 004, no. 096 (M-020), 11. Juli 1980 (1980-07-11) & JP 55 054678 A (MATSUMOTO TOKIO), 22. April 1980 (1980-04-22)

## Beschreibung

Bei der Planung und der Realisierung von Windparks spielen die zu erwartenden Schallemissionen eine zunehmend wichtige Rolle für die Genehmigung und Akzeptanz. Die dazu nötigen Schallimmissionsberechnungen basieren in der Regel auf vermessenen Schallleistungspegeln (L_{w}) der Windenergieanlagen und werden mit gängigen Softwareprogrammen durchgeführt. Auch finden immer häufiger Schallimmissionsmessungen statt, so dass an einem bestimmten Immissionspunkt (außerhalb oder innerhalb des Windparks) der Schallpegel einer einzelnen Anlage oder der Schallpegel eines gesamten Windparks ermittelt werden kann. Ist der Immissionspunkt ein einzelnes Haus, eine Siedlung oder dergleichen, muss dort gemäß den gesetzlichen und ordnungspolitischen Vorschriften ein gewisser Schallleistungspegel wenigstens über bestimmte Zeiten, beispielsweise zwischen 22.00 Uhr abends und 6.00 Uhr morgens, eingehalten werden. Auch ist es nicht erlaubt, den Schallleistungspegel an einem Immissionspunkt, z. B. einer Siedlung, tagsüber über alle Maßen anwachsen zu lassen.

Aus US-A-4,496,847 ist ein Windpark mit mehreren Windenergieanlagen bekannt, bei welchen die Leistung einer einzelnen Windenergieanlage, wie bei Windenergieanlagen insgesamt üblich, auf eine Maximalleistung begrenzt ist.

Dem Interesse, an einem oder mehreren Immissionspunkten die geforderten Schallleistungspegel einzuhalten, steht das Interesse des Windparkbetreibers gegenüber, mit dem Windpark die maximal mögliche Energieausbeute zu erzielen. Mittels einer nächtlichen Totalabschaltung aller Windenergieanlagen des Windparks wäre zwar der Einhaltung von Schallgrenzwerten Genüge getan, der gesamte Windparkbetrieb wäre dann jedoch sehr ineffektiv.

Die Aufgabe wird mittels eines Verfahrens nach den Ansprüchen 1, 2 und einem Windpark gemäß Anspruch 4 gelöst. Vorteilhafte Weiterbildungen sind in den Unteransprüchen beschrieben.

Der Erfindung liegt die Erkenntnis zugrunde, dass die Windenergieanlagen, auf die der Wind in einem Windpark zuerst trifft, so geregelt werden, dass ihre Leistung geringer ist als die maximal mögliche Leistung und dem durchstreichenden Wind Windenergie entziehen und somit eine höhere Geschwindigkeit annimmt und mit dieser höheren Windgeschwindigkeit auf die Anlagen treffen kann, die - aus Windrichtung gesehen - hinter den ersten Windenergieanlagen stehen.

Des weiteren liegt der Erfindung die Erkenntnis zugrunde, dass die Schallemission einer Windenergieanlage von verschiedenen Parametern und Kategorien abhängt. Grob betrachtet kann die Schallentwicklung in zwei Kategorien unterteilt werden. Eine Kategorie ist die Tonhaltigkeit, d.h. die Schallentwicklung vom Maschinenteil (Antriebteil) der Windenergieanlage. Dies wird auch als sogenannter mechanischer Schall bezeichnet. Die andere Kategorie ist ein breitbandiges Geräusch der Windenergieanlage, hervorgerufen durch aerodynamischen Schall von den Rotorblättern und sonstige breitbandige Maschinengeräusche, z. B. von Lüftern.

Der sogenannte mechanische Schall kann von verschiedenen mechanischen Komponenten, wie z. B. Generator und/oder Getriebe, herrühren. Der Schall wird z. B. über die Struktur der Anlage übertragen und von deren Oberflächen abgestrahlt. Dieser Schall hat in der Regel tonhaltigen Charakter, d.h. die Schallabstrahlung lässt sich einer bestimmten Frequenz zuordnen. Die Schallquellen können bestimmt werden, so dass entsprechende Gegenmaßnahmen getroffen werden können (z. B. Körperschallentkopplung).

Der Schallleistungspegel einer Windenergieanlage wird jedoch im Wesentlichen von den aerodynamischen Geräuschen bestimmt, die von den Luftströmungen an den Rotorblättern hervorgerufen werden. Da sich die Schallentwicklung etwa in fünfter Potenz zur Blattspitzengeschwindigkeit verhält, bedeutet eine erhöhte Drehzahl immer auch eine erhöhte Schallemission. Dieses Geräusch weist ein breitbandiges Frequenzspektrum auf. Für einen Rotordurchmesser von 40m wurde eine Änderung des Schallleistungspegels um 1 dB(A) pro Rotorumdrehung in der Minute ermittelt. Hierbei ist zu beachten, dass eine Reduktion des Schallleistungspegels um 3dB(A) bereits eine Halbierung (akustisch hörbar) dieser Größe entspricht.

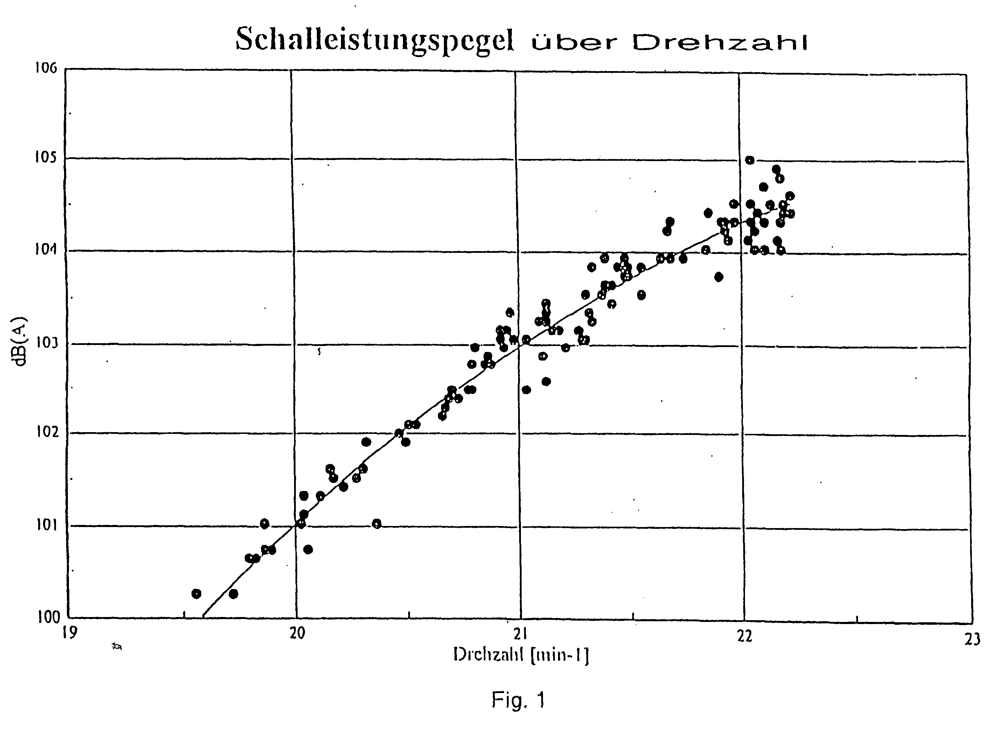

Die Abhängigkeit des Schallleistungspegels (in Dezibel) von der Drehzahl einer Windenergieanlage ist in Fig. 1 dargestellt. Hierbei handelt es sich um eine Windenergieanlage vom Typ E-66 der Firma Enercon. Es ist hierbei zu erkennen, dass bei einer Windenergieanlage dieses Typs bei einer Drehzahl von 22 Umdrehungen pro Minute der abgestrahlte Schall etwa 104 bis 105 dB beträgt, während der Schallleistungspegel bei einer Drehzahl von etwa 20 Umdrehungen pro Minute bereits auf etwa 101 dB absinkt.

Die gesetzlichen Bestimmungen zur Einhaltung der Schallgrenzwerte fordern je nach Standort (Wohn-, Misch-, Industriegebiet) und Uhrzeit bestimmte Werte. In der Regel sind z. B. zwischen 22 Uhr abends und 6 Uhr morgens deutlich niedrigere Werte einzuhalten als tagsüber.

Es wird daher vorgeschlagen, entweder den Systemwirkungsgrad einer Windenergieanlage zu erniedrigen, d.h. die gewünschte Generatorleistung bei geringeren Drehzahlen zu fahren (andere Drehzahl-Leistungskennlinie), oder, falls dies nicht ausreicht, die Drehzahl und damit indirekt auch die Generatorleistung zu reduzieren. Beide Möglichkeiten können mittels einer elektrischen Steuerung während der Nacht oder zu anderen kritischen Zeiten angewendet werden.

Eine getriebefreie, drehzahlvariable Windenergieanlage mit einstellbarer Drehzahl-Leistungskennlinie (beispielsweise vom Typ E-12, E-30, E-40, E-58, E-66 der Firma Enercon) in Verbindung mit der erfindungsgemäßen flexiblen Steuerung bietet die Möglichkeit, die Windenergieanlagen uhrzeitabhängig mit begrenzten Maximal-Drehzahlen und somit mit geringeren Schallleistungspegeln zu betreiben.

In einem Windpark mit einer Gruppe von mehreren Windenergieanlagen, die in mehreren Reihen aufgestellt sind, trifft der Wind unter bestimmten Windrichtungsbedingungen zuerst auf die erste Reihe von Windenergieanlagen. Diese entziehen dem Wind kinetische Energie und die Windgeschwindigkeit wird somit verringert. Die zweite Reihe von Anlagen, die hinter der ersten Reihe angeordnet ist (immer aus Sicht der Windrichtung), erfährt also eine kleinere Windgeschwindigkeit als die erste Reihe. Die nächste Reihe (usw.) erfährt eine noch geringere Windgeschwindigkeit. Entsprechend der Höhe der Windgeschwindigkeit verhält sich auch die Rotordrehzahl bei Anlagen mit variabler Drehzahl und damit verbunden sinkt die erzeugte elektrische Leistung mit schwächerem Wind bei 5 solchen Anlagen, die hinter der ersten Reihe platziert sind.

Somit ergibt sich schon aus der Aufstellung der Anlagen im Windpark eine Abstufung in den Schallleistungspegeln der einzelnen Anlagen.

Muss nun an einem oder mehreren Immissionspunkten außerhalb des Windparks die gesetzliche Vorschrift zur Einhaltung von maximalen Schallpegeln eingehalten werden, wird erfindungsgemäß zur Steuerung der einzelnen Anlagen des Windparks vorgeschlagen, dass diese so betrieben werden, dass am Immissionspunkt (oder an den Immissionspunkten) die ankommenden Gesamt-Schallpegel so niedrig sind, dass vorgegebene Grenzwerte eingehalten werden.

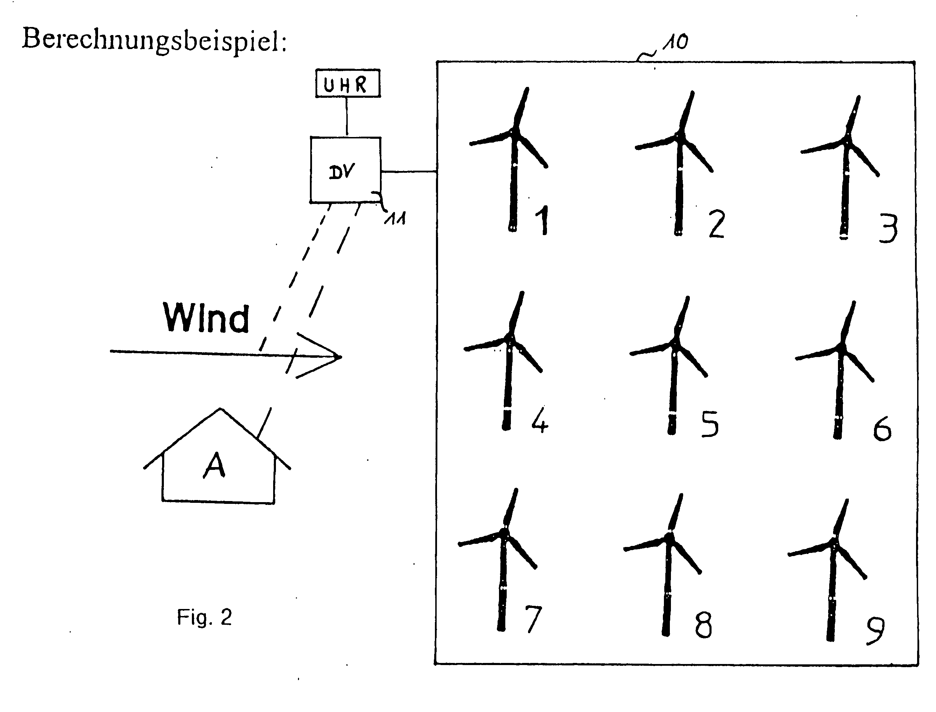

Fig. 2 zeigt ein Beispiel eines Windparks, bei dem jeweils drei Windenergieanlagen in drei Reihen angeordnet sind. Als Immissionspunkt A sei ein einzelstehendes Haus angenommen und der Wind trifft auf den Windpark aus Richtung des Hauses, also des Immissionspunktes A. Aus oben erwähnten Gründen ist die Windgeschwindigkeit für die Anlagen der ersten Reihe (Nr. 1, 4, 7) am größten, während der Wind auf die Anlagen in den nachfolgenden Reihen mit einer geringeren Windgeschwindigkeit trifft. Durch die höhere Windgeschwindigkeit wäre ohne die erfindungsgemäße Steuerung auch die Drehzahl der Anlagen der ersten Reihe größer als die Drehzahl der Anlagen der zweiten Reihe. Aus den bereits beschriebenen Erwägungen heraus hat dies zur Folge, dass die Windenergieanlagen der ersten Reihe den größten Schallpegel erzeugen, was bezüglich des Immissionspunktes um so schwerwiegender ist, weil die Anlagen der ersten Reihe diejenigen sind, die dem Immissionspunkt A am nächsten liegen.

Wie aus Fig. 2 zu entnehmen ist, wird der Windpark 10 mit den Windenergieanlagen 1-9 mittels einer Datenverarbeitungseinrichtung (z. B. Computer) 11 gesteuert. Die Datenverarbeitungseinrichtung verarbeitet u.a. Werte über die Windrichtung, Windgeschwindigkeit, Uhrzeit sowie Schallpegel, die am Immissionspunkt A gemessen wurden oder aufgrund von vorherigen Messungen dort angenommen werden können. Die Werte für die Windgeschwindigkeit bzw. Windrichtung können auch von entsprechenden Messeinrichtungen an den Windenergieanlagen übermittelt werden. Mittels der Datenverarbeitungseinrichtung ist die gesamte Steuerung aller Windenergieanlagen des Windparks (oder eines Teils hiervon) möglich, und die Datenverarbeitungseinrichtung steuert je nach Ermittlung der Daten für Uhrzeit, Windrichtung, Windgeschwindigkeit und/oder Schallleistungspegel am Immissionspunkt Ansteuereinheiten der Windenergieanlagen 1 -9, so dass deren Drehzahl reduziert wird bzw. die zu steuernde Anlage in einer anderen Drehzahl-Leistungskennlinie betrieben wird. Eine Verminderung der Drehzahl einer Windenergieanlage kann bedeuten, dass auch die Leistung entsprechend vermindert wird. Es ist durchaus möglich, dass bei verminderter Drehzahl die Leistung der Windenergieanlage gleich bleibt, weil gleichzeitig durch eine Pitchregelung der Rotorblätter (ist von Windenergieanlagen vom Typ E-40 bekannt) es auch möglich ist, die Windenergieanlagen mit einer anderen Drehzahl-Leistungskennlinie zu betreiben.

Bei der erfindungsgemäßen Windparksteuerung werden die Anlagen der ersten Reihe in ihrer Leistung und/oder Drehzahl drastisch reduziert, weil die Entfernung zum Haus A am nächsten ist und diese Anlagen daher den größten Beitrag zum Schallimmissionspegel liefern. Die Anlagen der zweiten Reihe (Nr. 2, 5, 8) erhalten dadurch eine höhere Windgeschwindigkeit und produzieren somit eine höhere Leistung. Ohne die erfindungsgemäße Regelung würde sich automatisch eine fallende Leistung bzw. ein fallender Schallleistungspegel der Windenergieanlage in Windrichtung ergeben. Mit der erfindungsgemäßen Steuerung (Regelung) der Windenergieanlage wird die natürliche Aufteilung mehr oder weniger gespiegelt, ohne dabei nennenswerte elektrische Arbeit (kWh) zu verlieren, weil die Leistung, um die die Anlagen der ersten Reihe beschnitten werden, von den Anlagen der folgenden Windreihen erbracht werden kann.

Dies sei an einem Berechnungsbeispiel näher erläutert. Hierbei wird die in Fig.2 dargestellte Szenerie angenommen mit einem Windpark mit neun Windenergieanlagen vom Typ E-40 (Enercon), einer Windgeschwindigkeit in Reihe 1 (Anlagen 1, 4, 7) von 12m/sec. mit einem Abstand der Anlagen untereinander von jeweils 300m und mit einem Abstand der Anlage 2 zum Immissionspunkt A von 400m. Daraus ergibt sich bei Standardbetriebsweise folgende Verteilung von Leistung und Schallleistungspegel:

| | **Reihe 1** | **Reihe 2** | **Reihe 3** |
|---|---|---|---|
| | | | |
| Anlagenummern | 1/4/7 | 2/5/8 | 3/6/9 |
| Wind in Nabenhöhe [m/s] | 12 | 10,7 | 9,2 |
| Leistung [kW] | 462 | 365 | 235 |
| Schallleistungspegel [dB (A)] | 100,4 | 99,4 | 98,3 |

Der am Immissionspunkt A auftretende Schallpegel würde in diesem Fall etwa 42dB(A) betragen. Für den Fall, dass während des Nachtzeitraums ein Schallpegel von 40dB(A) am Immissionspunkt eingehalten werden muss, gibt es folgende Möglichkeiten:

Bei nicht drehzahlvariabel betriebenen Anlagen muss z. B. die dem Immissionspunkt A am nächsten liegende Anlage (Nr. 2) abgeschaltet werden. Hieraus resultiert der Verlust der durch diese Anlage ansonsten erzeugten Leistung.

Bei drehzahlvariabel zu betreibenden Anlagen vom Typ E-40 (diese Anlagen lassen sich auch mit verschiedenen Drehzahl-Leistungskennlinien fahren) und bei der erfindungsgemäßen Windparksteuerung kann die gesamte Reihe 1 des Windparks in der Drehzahl (und ggf. auch in der Leistung) reduziert werden, während entsprechend die beiden anderen Reihen aufgrund der sich dann einstellenden höheren Windgeschwindigkeiten mit erhöhter Leistung betrieben werden. Die dadurch ebenfalls erhöhten Schallleistungspegel der Anlagen der zweiten und dritten Reihe tragen jedoch aufgrund ihrer Entfernung nicht relevant zum Schallpegel am Immissionsort A bei. Hierbei stellen sich dann z. B. folgende Werte ein:

| Windpark gemäß Erfindung | **Reihe 1** | **Reihe 2** | **Reihe 3** |
|---|---|---|---|
| | | | |
| Anlagenummern | 1/4/7 | 2/5/8 | 3/6/9 |
| Wind in Nabenhöhe [m/s] | 12 | 11,4 | 10,7 |
| Leistung [kW] | 210 | 280 | 365 |
| Schallleistungspegel [dB (A)] | 98,0 | 98,5 | 99,4 |

Damit ergibt sich am Immissionsort A ein Schallpegel von etwa 40dB(A) ohne Abschaltung einer Anlage.

Der besondere Vorteil des erfindungsgemäßen Windparkbetriebsverfahrens liegt darin, dass bei Planung von Windparks mit knapp (oder schwer) einzuhaltenden Schallimmissionspegeln etwas großzügiger geplant werden kann, da Schallgrenzwerte im Wesentlichen nur nachts eingehalten werden müssen. Dies erlaubt unter Umständen auch die Aufstellung von einer Anlage mehr (als was sonst möglich wäre), was sich positiv auf die Wirtschaftlichkeit eines Windparkprojektes auswirken kann, weil die vorhandene Windparkfläche besser ausgenutzt wird.

## Patentansprüche

1. Verfahren zum Betreiben eines Windparks (10) mit einer Anzahl von ersten Windenergieanlagen (1,4,7) und einer Anzahl von zweiten Windenergieanlagen (2,5,8) wobei die ersten Windenergieanlagen diejenigen sind, auf die der Wind zuerst trifft und die zweiten Windenergieanlagen in Windrichtung gesehen hinter den ersten Windenergieanlagen stehen, wobei die Windenergieanlagen drehzahlvariabel ausgebildet sind und über eine Pitchregelung der Rotorblätter verfügen,
**dadurch gekennzeichnet, dass** die Drehzahl und/oder Leistung der ersten Windenergieanlagen unter ihren maximal möglichen Nennwert eingestellt wird/werden.

2. Verfahren nach Anspruch 1,
**dadurch gekennzeichnet, dass** die ersten Windenergieanlagen eine geringere Leistung und/oder eine geringere Drehzahl aufweisen als die zweiten Anlagen.

3. Verfahren nach einem der vorhergehenden Ansprüche, wobei der Windpark wenigstens zwei Windenergieanlagen aufweist,
**dadurch gekennzeichnet, dass** bei einem Wind, dessen Windrichtung im Wesentlichen vom Immissionspunkt zum Windpark verläuft, die Windenergieanlage oder Anlagen, die dem Immissionspunkt am nächsten liegt oder liegen, in ihrer Leistung und/oder Drehzahl reduziert werden.

4. Windpark mit wenigstens zwei Windenergieanlagen, bei dem die Windenergieanlagen des Windparks oder ein Teil hiervon mit einem Verfahren nach einem der vorhergehenden Ansprüche gesteuert werden und die Windenergieanlagen Rotorblätter mit einer Pitchregelung aufweisen.

5. Windpark nach Anspruch 4,
**dadurch gekennzeichnet, dass** die Windenergieanlagen drehzahlvariable Windenergieanlagen sind.

## Claims

1. Method for operating a wind park (10) having a number of first wind energy installations (1, 4, 7) and a number of second wind energy installations (2, 5, 8), the first wind energy installations being those which are first hit by the wind, and the second wind energy installations being positioned downstream of the first wind energy installations when viewed in the wind direction, the wind energy installations being designed such that their rotation speed is variable and having pitch regulation of the rotor blades, **characterized in that** the rotation speed and/or power of the first wind energy installations is/are set below their maximum possible rated value.

2. Method according to Claim 1, **characterized in that** the first wind energy installations have a lower power and/or a lower rotation speed than the second installations.

3. Method according to one of the preceding claims, the wind park having at least two wind energy installations, **characterized in that**, in the case of a wind whose wind direction runs essentially from the immission point to the wind park, the wind energy installation or installations which is or are located closest to the immission point has or have its or their power and/or rotation speed reduced.

4. Wind park having at least two wind energy installations, in the case of which the wind energy installations of the wind park, or some of them, are controlled using a method according to one of the preceding claims, and the wind energy installations have rotor blades having pitch regulation.

5. Wind park according to Claim 4, **characterized in that** the wind energy installations are variable rotation speed wind energy installations.

## Revendications

1. Procédé d'entraînement d'un parc éolien (10) avec un nombre de premières éoliennes (1, 4, 7) et un nombre de secondes éoliennes (2, 5, 8), les premières éoliennes étant celles sur lesquelles le vent arrive d'abord et les secondes éoliennes, vues dans le sens du vent, se trouvant derrière les premières éoliennes, les éoliennes étant réalisées à vitesse variable et disposant d'un contrôle à calage variable des pales, **caractérisé en ce que** la vitesse de rotation et/ou la puissance des premières éoliennes est (sont) réglée(s) en dessous de leur valeur nominale maximum possible.

2. Procédé selon la revendication 1, **caractérisé en ce que** les premières éoliennes ont une puissance plus faible et/ou une vitesse de rotation plus faible que les secondes éoliennes.

3. Procédé selon l'une des revendications précédentes, le parc éolien comportant au moins deux éoliennes, **caractérisé en ce que** dans le cas d'un vent dont la direction s'étend essentiellement du point d'émission vers le parc éolien, la puissance et/ou la vitesse de rotation de l'éolienne ou des éoliennes les plus proches du point d'émission sont réduites.

4. Parc éolien avec au moins deux éoliennes, où les éoliennes du parc éolien ou une partie de celles-ci sont commandées avec un procédé selon l'une des revendications précédentes et où les éoliennes comportent des pales avec un contrôle à calage variable.

5. Parc éolien selon la revendication 4, **caractérisé en ce que** les éoliennes sont des éoliennes à vitesse variable.
